# EUROPÄISCHE PATENTSCHRIFT

(11) **EP 4 118 398 B1**
(45) Veröffentlichungstag und Bekanntmachung des Hinweises auf die Patenterteilung: **01.07.2026**
(21) Anmeldenummer: 21709675.9
(22) Anmeldetag: 03.03.2021
(51) Int. Cl.: G01D 5/244, G01D 5/20

(54) **INDUKTIVE ROTORLAGESENSOREINRICHTUNG, ANTRIEBSEINRICHTUNG**
INDUCTIVE SENSOR DEVICE FOR ROTOR POSITION, DRIVE DEVICE
DISPOSITIF CAPTEUR INDUCTIF DE LA POSITION D'UN ROTOR, DISPOSITIF D'ENTRAÎNEMENT

(30) Priorität: 13.03.2020 DE 102020203275
(43) Veröffentlichungstag der Anmeldung: 18.01.2023
(73) Patentinhaber: Robert Bosch GmbH, 70442 Stuttgart (DE)
(72) Erfinder: WELSCH, Wolfgang, 69121 Heidelberg (DE); KURZ, Andreas, 74321 Bietigheim (DE); DAUTH, Robert, 74078 Heilbronn (DE); LERCHENMUELLER, Klaus, 87549 Rettenberg (DE); FELLA, Sina, 74196 Neuenstadt (DE); KRZYZANOWSKI, Tim, 74348 Lauffen Am Neckar (DE)
(86) Internationale Anmeldenummer: PCT/EP2021/055307
(87) Internationale Veröffentlichungsnummer: WO 2021/180535

(56) Entgegenhaltungen:
- EP-A1- 3 355 032
- EP-A1- 3 683 551
- EP-A1- 3 683 552
- US-A1- 2002 011 839
- US-A1- 2019 056 244

## Beschreibung

Die Erfindung betrifft eine induktive Rotorlagesensoreinrichtung zur Erfassung einer Rotorwinkellage eines Rotors einer elektrischen Maschine, mit einer Senderspule zur Erzeugung elektromagnetischer Wellen und einer Empfängerspule zum Erfassen der von der Senderspule erzeugten und durch den Rotor beeinflussten elektromagnetischen Wellen, und mit einer Recheneinheit, die dazu ausgebildet ist, die Senderspule anzusteuern und die durch die Empfängerspule erfassten elektromagnetischen Wellen zur Bestimmung der Rotorwinkellage auszuwerten, wobei die Spulen und die Recheneinheit auf einer gemeinsamen Leiterplatte angeordnet sind.

Weiterhin betrifft die Erfindung eine Antriebseinrichtung für ein Bremssystem eines Kraftfahrzeugs, mit zumindest einer elektrisch betreibbaren elektrischen Maschine und mit einer der elektrischen Maschine zugeordneten induktiven Rotorlagesensoreinrichtung zur Erfassung einer Rotorwinkellage eines Rotors der elektrischen Maschine.

### Stand der Technik

Induktive Rotorlagesensoreinrichtungen sind aus dem Stand der Technik bekannt. Diese nutzen den Effekt aus, dass in Abhängigkeit von der Rotorwinkellage eines Rotors, der einem Feld von elektromagnetischen Wellen einer Senderspule ausgesetzt ist, die elektromagnetischen Wellen nachvollziehbar beeinflusst werden. Um die Senderspule anzusteuern und das durch die Empfängerspule erfasste Ergebnis auszuwerten, weisen derartige Sensoreinrichtungen regelmäßig auch eine Steuereinheit oder Recheneinheit, beispielsweise in Form eines Mikroprozessors oder einer anwenderspezifischen Schaltung auf. Insbesondere steuert die Recheneinheit die Senderspule zum Erzeugen eines modulierten Signals an. Das durch die Senderspule empfangene Signal wird dann von der Recheneinheit oder optional einer weiteren Recheneinheit demoduliert, um eine Auswertung zu ermöglichen. Die elektromagnetischen Wellen koppeln somit von der Senderspule in den Rotor und von dem Rotor in eine Empfängerspule ein, wobei das durch die Empfängerspule erfasste elektromagnetische Signal Aufschluss über die Rotorwinkellage zulässt. Derartige Rotorlagesensoreinrichtungen sind beispielsweise unter dem Begriff "Resolver" bekannt.

Typischerweise sitzen die Recheneinheit und die zumindest zwei Spulen, also Senderspule und Empfängerspule auf derselben Leiterplatte, um eine einfache elektrische und/oder signaltechnische Verbindung zwischen der Recheneinheit und der Spule zu realisieren, sowie um eine kompakte Bauform zu erhalten.

Eine Rotorlagesensoreinrichtung gemäß dem Oberbegriff des Anspruchs 1 ist beispielsweise aus der Offenlegungsschrift US 2019/056244 A1 bekannt. Die Offenlegungsschrift EP 3 355 032 A1 offenbart eine Rotorlagesensoreinrichtung mit einer Leiterplatte, die zwei starre Abschnitte aufweist, die durch einen flexiblen Abschnitt miteinander verbunden sind.

### Offenbarung der Erfindung

Die erfindungsgemäße Rotorlagesensoreinrichtung mit den Merkmalen des Anspruchs 1 hat den Vorteil, dass diese besonders bauraumsparend ausgebildet ist und darüber hinaus den vorhandenen Bauraum für die Spulenanordnung maximal ausnutzt, wodurch ein vorteilhafter Betrieb der Rotorlagesensoreinrichtung gewährleistet wird. Erfindungsgemäß ist hierzu vorgesehen, dass die Spulen, also die zumindest eine Empfängerspule und die zumindest eine Senderspule, auf einer Vorderseite der Leiterplatte und die Recheneinheit auf einer von der Vorderseite abgewandten Rückseite der Leiterplatte angeordnet sind. Dadurch liegt die Leiterplatte zwischen den Spulen und der Recheneinheit, wobei die elektrische oder signaltechnische Verbindung von Recheneinheit und Spulen beispielsweise durch Durchkontaktierungen oder dergleichen in kostengünstiger Art und Weise realisiert oder realisierbar ist.

Dadurch, dass die Recheneinheit auf der Rückseite der Leiterplatte liegt, kann die Vorderseite vollständig durch die Spulen genutzt werden, sodass der zuvor Verfügung stehende Bauraum maximal ausgenutzt wird.

Besonders bevorzugt ist zwischen den Spulen und der Recheneinheit zumindest eine Abschirmschicht zur Abschirmung der Recheneinheit vor den elektromagnetischen Wellen angeordnet. Dadurch wird verhindert, dass trotz der räumlichen Nähe der Recheneinheit zu den Spulen die elektromagnetischen Wellen den Betrieb der Recheneinheit beeinträchtigen oder stören können.

Besonders bevorzugt erstreckt sich die Abschirmschicht über die gesamte Vorderseite oder die gesamte Rückseite der Leiterplatte, um eine maximale Abschirmung zu gewährleisten.

Gemäß einer weiteren, nicht erfindungsgemäßen Ausführungsform ist vorgesehen, dass die Leiterplatte kreisscheibenförmig ausgebildet ist. Dadurch ist die Leiterplatte und die Rotorlagesensoreinrichtung insgesamt vorteilhaft der elektrischen Maschine zuordenbar, die in der Regel ein Gehäuse oder Gehäuseabschnitt aufweist, der ebenfalls kreisscheibenförmig oder kreisringförmig ausgebildet ist. Insbesondere ist dadurch die Leiterplatte einer Stirnseite der elektrischen Maschine, also in einer Ebene senkrecht zur Rotationsachse der Antriebswelle oder der Rotorwelle der elektrischen Maschine angeordnet.

Erfindungsgemäß ist die Leiterplatte kreisscheibenringförmig ausgebildet, sodass die Leiterplatte eine zentrale Durchgangsöffnung aufweist, durch welche beispielsweise auch die Antriebswelle mit oder ohne Zwischenschaltung eines Drehlagers führbar oder geführt ist, sodass die Leiterplatte auch auf der einem durch die Antriebswelle antreibbaren Verbraucher zugeordneten Seite der elektrischen Maschine anordenbar ist. Vorzugsweise ist die Leiterplatte auf der von dem Verbraucher abgewandten Seite der elektrischen Maschine angeordnet.

Gemäß einer bevorzugten Weiterbildung der Erfindung ist die Abschirmschicht mehrfach geschlitzt, insbesondere mehrfach radial geschlitzt ausgebildet. Durch die geschlitzte Ausbildung weist die Abschirmschicht mehrere Schlitze auf, die sich vorzugsweise jeweils gerade erstrecken und besonders bevorzugt radial ausgerichtet sind, um die radial geschlitzte Ausbildung zu realisieren. Durch die Schlitze wird erreicht, dass eine Signalamplitude der Rotorlagensensoreinrichtung nur minimal, insbesondere weniger als 10 %, durch sich in der Abschirmschicht ausprägende Wirbelströme abgeschwächt wird. Vorzugsweise werden durch die Schlitze eine möglichst hohe Anzahl von Segmenten der Abschirmschicht hergestellt beziehungsweise realisiert, sodass die Abschwächung minimiert wird.

Gemäß einer bevorzugten Weiterbildung der Erfindung weist die Leiterplatte eine weitere Abschirmschicht auf, wobei die beiden Abschirmschichten jeweils derart mehrfach geschlitzt ausgebildet und indirekt oder direkt übereinanderliegend angeordnet sind, dass sich keine der Schlitze überlappen. Dadurch ist in einer axialen Draufsicht auf die Leiterplatte gesehen kein abschirmschichtfreier Bereich vorhanden. Die Abschirmschichten können auf der gleichen Seite der Leiterplatte liegen, beispielsweise auf der Vorderseite oder auf der Rückseite, oder eine der Abschirmschichten liegt auf der Vorderseite und die andere der Abschirmschichten auf der Rückseite der Leiterplatte. Besonders bevorzugt ist die jeweilige Abschirmschicht als Innenschicht oder -lage der Leiterplatte selbst ausgebildet. So kann die Leiterplatte beispielsweise vier, sechs oder mehr Lagen aufweisen, beispielsweise zwei Außenlagen und vier Innenlagen, von denen insbesondere eine oder zwei als Abschirmschichten ausgebildet sind. Insbesondere sind die beiden Abschirmschichten radial geschlitzt ausgebildet und derart zueinander verdreht, dass sich keine Schlitze der beiden Abschirmschichten überlappen, sodass bei einer Draufsicht auf die Leiterplatte eine sich durchgehende Abschirmschichtung ergibt.

Gemäß einer bevorzugten Ausführungsform der Erfindung ist die jeweilige Abschirmschicht als Innenlage der Leiterplatte ausgebildet, wie oben bereits erwähnt. Dazu wird insbesondere beim Herstellprozess der mehrlagigen Leiterplatte die jeweilige Abschirmschicht als Innenlage lithographisch aufgebracht und aus einer Kupferkaschierung der Innenlagen der Leiterplatte geätzt.

Erfindungsgemäß ist die Leiterplatte als in einer rechteckförmig ausgebildeten Basisleiterplatte freigeschnittene Leiterplatte ausgebildet und durch nur einen oder durch mehrere, insbesondere maximal vier Stege mit der rechteckförmigen Leiterplatte einstückig verbunden und durch Zerstörung der Stege aus dieser herausbrechbar. Da Leiterplatten üblicherweise rechteckförmig vorliegen, durch das kreisförmige oder kreisringförmige Freischneiden der Leiterplatte auf einfache Art und Weise die Leiterplatte kostengünstig auch in einer Massenproduktion realisierbar. Die rechteckförmige Basisplatte hat außerdem den Vorteil, dass für Testzwecke die Rotorlagensensoreinrichtung einfacher in eine Prüfeinrichtung einbringbar ist, die üblicherweise auf rechteckförmige Objekte ausgelegt ist. Bei der Basisleiterplatte handelt es sich insbesondere um einen Nutzen, in welchem mehrere der Leiterplatten lösbar, insbesondere herausbrechbar, ausgebildet sind.

Die erfindungsgemäße Antriebseinrichtung mit den Merkmalen des Anspruchs 6 zeichnet sich durch die erfindungsgemäße Ausbildung der Rotorlagesensoreinrichtung aus. Es ergeben sich hierdurch die bereits genannten Vorteile.

Im Folgenden soll die Erfindung anhand der Zeichnungen näher erläutert werden. Dazu zeigen
- Figur 1: eine vorteilhafte Antriebseinrichtung in einer vereinfachten Darstellung,
- Figuren 2A und 2B: eine vorteilhafte Rotorlagensensoreinrichtung der Antriebseinrichtung in unterschiedlichen Ansichten und
- Figur 3: eine erfindungsgemäße Ausgestaltung der Rotorlagesensoreinrichtung.

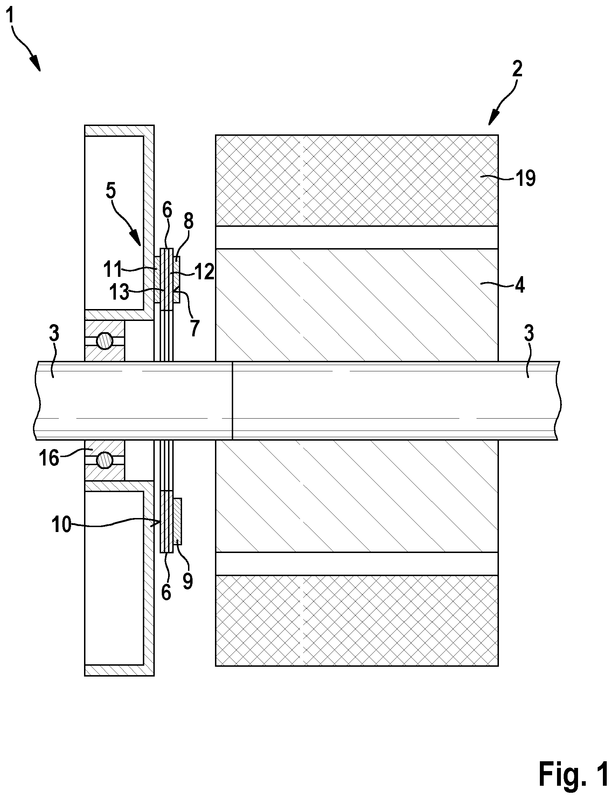

Figur 1 zeigt in einer vereinfachten Darstellung eine vorteilhafte Antriebseinrichtung 1 für einen hier nicht näher dargestellten Verbraucher, beispielsweise Bremssystem eines Kraftfahrzeugs. Die Antriebseinrichtung 1 weist eine elektrische Maschine 2 auf, die eine Antriebswelle 3 aufweist, die in einem hier nicht dargestellten Gehäuse drehbar gelagert ist und einen Rotor 4 trägt, welchem ein gehäusefester Stator 19 zugeordnet ist. Die Antriebswelle 3 ist mit dem Verbraucher gekoppelt oder koppelbar, um diesen anzutreiben.

Dem Rotor 4 der elektrischen Maschine 2 ist eine Rotorlagesensoreinrichtung 5 zugeordnet, die per Induktion eine Rotorwinkellage des Rotors 4 erfasst. Dazu weist die Rotorlagesensoreinrichtung 5 eine Leiterplatte 6 auf, die gemäß dem vorliegenden Ausführungsbeispiel kreisringscheibenförmig ausgebildet und koaxial zu der Antriebswelle 3 einer Stirnseite des Rotors 4 zugeordnet angeordnet ist. Die Leiterplatte 6 trägt auf ihrer dem Rotor 4 zugewandten Vorderseite 7 zumindest eine Senderspule 8 sowie zumindest eine Empfängerspule 9. Auf der von dem Rotor 4 abgewandten Rückseite 10 der Leiterplatte 6 ist eine Recheneinheit 11 angeordnet, die gemäß dem vorliegenden Ausführungsbeispiel als anwenderspezifische integrierte Schaltung (ASIC) ausgebildet und elektrisch mit den beiden Spulen 8, 9 verbunden ist.

Die Recheneinheit 11 ist dazu ausgebildet, die Senderspule 7 dazu anzusteuern, ein Signal mittels elektromagnetischer Wellen auszusenden, das den Rotor 4 durchdringt. Die elektromagnetischen Wellen werden durch den Rotor 4 beeinflusst und werden zu der Empfängerspule 9 reflektiert oder geleitet, wobei sie in Abhängigkeit von der Drehwinkelstellung des Rotors 4 beeinflusst werden. Die Recheneinheit 11 ist dazu ausgebildet, das von der Empfängerspule 9 durch erfasste und den Rotor 4 beeinflusste Signal zu demodulieren und in Abhängigkeit des erfassten Signals die Rotorwinkellagestellung des Rotors 4 zu erfassen. Verfahren zur Bestimmung der Rotorwinkellage mittels einer induktiven Rotorlagesensoreinrichtung, die allgemein auch als induktiver Rotorlagesensor, insbesondere Hochfrequenzsensor, bezeichnet wird, sind grundsätzlich bekannt, sodass auf die konkrete Funktion und Durchführung des Verfahrens an dieser Stelle nicht eingegangen werden soll.

Dadurch, dass die Recheneinheit 11 auf der Rückseite 10 und die Spulen 8, 9 auf der Vorderseite 7 der Leiterplatte 6 angeordnet sind, wird erreicht, dass die dem Rotor 4 zugewandte Oberfläche der Vorderseite 7 insgesamt durch die Spulen 8, 9 ausgefüllt werden kann, wodurch sich die Spulengröße maximiert. Üblicherweise ist die Spulengröße dadurch begrenzt, dass die Leiterplatte in dem Gehäuse der elektrischen Maschine 2 nur einen begrenzten Raum zur Verfügung hat, und dass auf der Leiterplatte außerdem neben den Spulen 8, 9 auch die Recheneinheit 11 oder mehrere derartige Recheneinheiten 11 angeordnet werden müssen. Durch die nunmehr vorteilhafte Anordnung wird jedoch der Bauraum auf der dem Rotor 4 zugewandten Oberfläche der Vorderseite 7 maximal durch die Spulen 8, 9 ausgenutzt, wodurch ein vorteilhaftes Detektionsergebnis der Rotorwinkellage erzielt wird.

Vorteilhafterweise liegen zwischen der Recheneinheit 11 einerseits und den Spulen 8, 9 andererseits eine oder mehrere Abschirmschichten 12, 13. Gemäß dem vorliegenden Ausführungsbeispiel sind die Abschirmschichten 12, 13 als Lagen der Leiterplatte 6 ausgebildet. Insbesondere sind die Abschirmschichten 12, 13 als Innenlagen hergestellt und trennen hochfrequente Bereiche, wie die Sende- und Empfangsspulen 8, 9 auf der Vorderseite 7 von den elektrischen Bauteilen auf der Rückseite 10 der Leiterplatte 6. Insbesondere sind die Abschirmschichten 12, 13 als Innenlagen lithographisch aufgebracht und aus einer Kupferkaschierung geätzt.

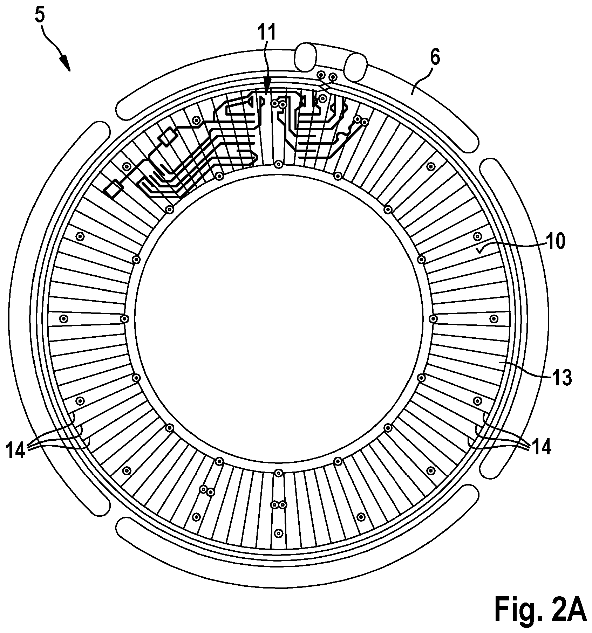

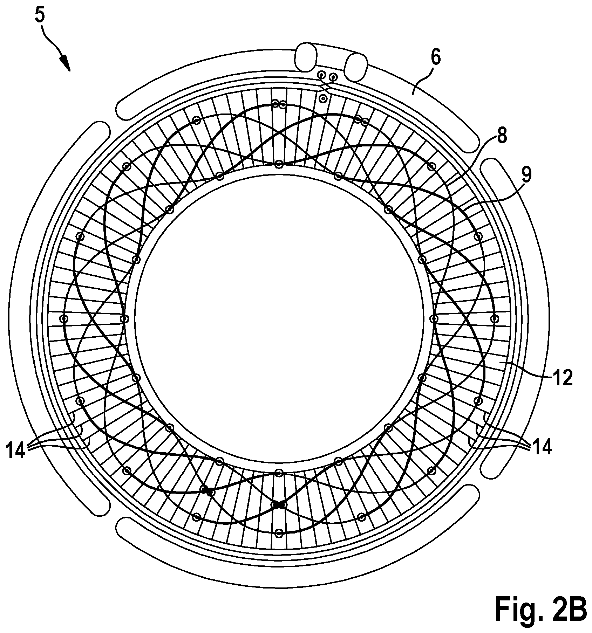

Figur 2 zeigt dazu die Rotorlagesensoreinrichtung 5 in einer Draufsicht auf die Rückseite 10 in Figur 2A und in einer Draufsicht auf die Vorderseite 7 in Figur 2B.

Wie in Figuren 2A und 2B zu erkennen, sind die Abschirmschichten 13 beziehungsweise 12 jeweils radial geschlitzt ausgebildet, sodass sich radiale Ringscheibensegmente der jeweiligen Abschirmschicht 12, 13 ergeben, die durch jeweils einen Schlitz 14, der sich radial erstreckt, voneinander getrennt sind. Die Schlitze 14 erstrecken sich vorzugsweise in radialer Erstreckung nicht vollständig durch die jeweilige Abschirmschicht 12, 13 hindurch, jedoch bevorzugt über die wesentliche Radialerstreckung, also nahezu über die gesamte radiale Breite. Dabei sind gemäß dem vorliegenden Ausführungsbeispiel die Abschirmschichten 12, 13 gleich geschlitzt, sodass sie die gleiche Anzahl von Schlitzen 14 und Kreisringsegmenten aufweisen. Außerdem sind die Abschirmschichten 12, 13 derart zueinander verdreht an der Leiterplatte 6 angeordnet, dass sich in der Draufsicht die Schlitze 14 der Abschirmschichten 12, 13 an keiner Stelle überlappen oder überschneiden, sodass sich eine insgesamt durchgehende Abschirmung ergibt, die zwischen der Recheneinheit 11 und den Spulen 8, 9 liegt.

Dadurch wird sichergestellt, dass ein Offset und eine Symmetrie der Spulensignale minimiert werden. Vorzugsweise erstrecken sich die Abschirmschichten 12 und 13 jeweils über die gesamte Leiterplatte 6, sodass keine auf der Leiterplatte 6 befindlichen Leiterbahnen über die Abschirmschichten 12, 13 hinausgehen.

Durch die geschlitzte Ausbildung der Abschirmschichten 12, 13 wird erreicht, dass eine Signalamplitude nur minimal, insbesondere weniger als 10 %, des sich in der jeweiligen Abschirmschicht 12, 13 ausprägende Wirbelströme abgeschwächt wird. Optional weist die Rotorlagesensoreinrichtung 5 gemäß dem weiteren Ausführungsbeispiel nur eine der Abschirmschichten 12 oder 13 auf, dann vorzugsweise jedoch nicht geschlitzt, sondern durchgängig.

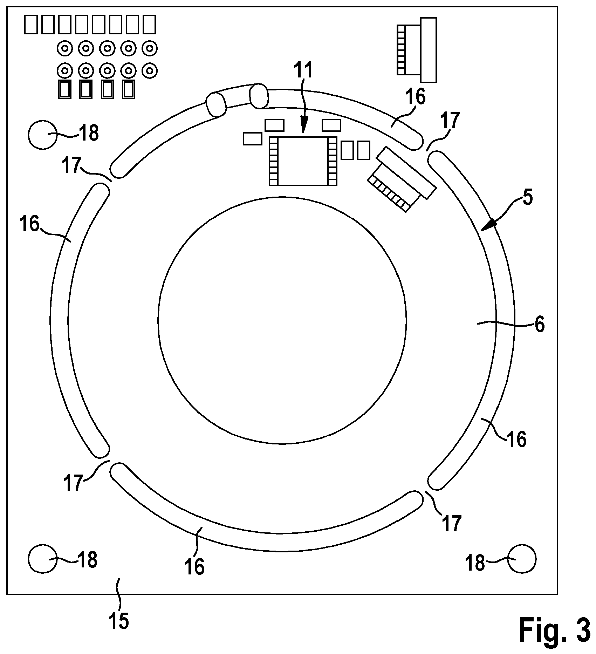

Figur 3 zeigt die Rotorlagesensoreinrichtung 5, wobei die kreisringförmige Leiterplatte 6 in eine rechteckförmige Basisleiterplatte 15 integriert ist. Die Leiterplatte 6 ist durch kreisringsegmentförmige Freischnitte 16 derart von der Basisleiterplatte 15 getrennt, dass vier Verbindungsstege 17 verbleiben, die einstückig sowohl mit der Basisleiterplatte 15 als auch mit der Leiterplatte 6 verbunden sind. Die Verbindungsstege 17 sind dabei derart schmal ausgewählt, dass die Leiterplatte 6 einfach aus der Basisleiterplatte 15 herausgebrochen werden kann. Hierdurch ist eine einfache Herstellung der Rotorsensorlageeinrichtung 5 ermöglicht. Darüber hinaus erlaubt die rechteckförmige Ausbildung der Basisleiterplatte 15 eine einfache Anbringung der Rotorlagensensoreinrichtung 5 an einem herkömmlichen Prüfstand, wobei die Anbringung an dem Prüfstand beispielsweise über die in der Figur 3 gezeigten drei Öffnungen 18 erfolgen kann, die zur Ausrichtung und beispielsweise Aufnahme einer Befestigungsschraube nutzbar sind.

## Patentansprüche

1. Induktive Rotorlagesensoreinrichtung (5) zur Erfassung einer Rotorwinkellage eines Rotors (4) einer elektrischen Maschine (2), mit einer Senderspule (8) zur Erzeugung elektromagnetischer Wellen und einer Empfängerspule (9) zum Erfassen der von der Senderspule (8) erzeugten und durch den Rotor (4) beeinflussten elektromagnetischen Wellen, und mit einer Recheneinheit (11), die dazu ausgebildet ist, die Senderspule (8) anzusteuern und die durch die Empfängerspule (9) erfassten elektromagnetischen Wellen zur Bestimmung der Rotorwinkellage auszuwerten, wobei die Spulen (8,9) und die Recheneinheit (11) auf einer gemeinsamen Leiterplatte (6) angeordnet sind, und wobei die Spulen (8,9) auf einer Vorderseite (7) und die Recheneinheit (11) auf einer von der Vorderseite (7) abgewandten Rückseite (10) der Leiterplatte (6) angeordnet sind, **dadurch gekennzeichnet, dass** die Leiterplatte (6) kreisscheibenringförmig ausgebildet ist,
wobei die induktive Rotorlagesensoreinrichtung eine rechteckförmige Basisleiterplatte (15) umfasst, und
wobei die Leiterplatte (6) als in der rechteckförmigen Basisleiterplatte (15) freigeschnittene Leiterplatte (6) ausgebildet und durch nur einen oder durch mehrere, insbesondere maximal vier Stege (17) mit der rechteckförmigen Basisleiterplatte (15) einstückig verbunden und durch Zerstören der Stege (17) aus dieser herausbrechbar ist.

2. Rotorlagesensoreinrichtung nach Anspruch 1, **dadurch gekennzeichnet, dass** zwischen den Spulen (8,9) und der Recheneinheit (11) zumindest eine Abschirmschicht (12,13) zur Abschirmung der Recheneinheit (11) vor den elektromagnetischen Wellen angeordnet ist.

3. Rotorlagesensoreinrichtung nach Anspruch 2, **dadurch gekennzeichnet, dass** sich die Abschirmschicht (12,13) über die gesamte Leiterplatte (6) erstreckt.

4. Rotorlagesensoreinrichtung nach einem der Ansprüche 2 und 3,
**dadurch gekennzeichnet, dass** die Abschirmschicht (12,13) mehrfach geschlitzt, insbesondere mehrfach radial geschlitzt ausgebildet ist.

5. Rotorlagesensoreinrichtung nach einem der Ansprüche 2 bis 4, **dadurch gekennzeichnet, dass** auf der einen Abschirmschicht (12) eine weitere Abschirmschicht (13) aufliegt, wobei die beiden Abschirmschichten (12,13) jeweils mehrfach geschlitzt derart ausgebildet und übereinanderliegend angeordnet sind, dass sich keine der Schlitze (14) überlappen.

6. Antriebseinrichtung (1) für eine Parkbremse eines Kraftfahrzeugs, mit einer elektrischen Maschine (2) und mit einer der elektrischen Maschine (2) zugeordneten induktiven Rotorlagesensoreinrichtung (5) zur Erfassung einer Rotorwinkellage eines Rotors (4) der elektrischen Maschine (2), **gekennzeichnet durch** die Ausbildung der Rotorlagesensoreinrichtung (5) gemäß einem oder mehreren der Ansprüche 1 bis 5.

## Claims

1. Inductive rotor position sensor device (5) for detecting a rotor angle position of a rotor (4) of an electric machine (2), comprising a transmitter coil (8) for generating electromagnetic waves and a receiver coil (9) for detecting the electromagnetic waves generated by the transmitter coil (8) and influenced by the rotor (4), and comprising a computing unit (11) which is designed to drive the transmitter coil (8) and evaluate the electromagnetic waves, which are detected by the receiver coil (9), for determining the rotor angle position, wherein the coils (8, 9) and the computing unit (11) are arranged on a common printed circuit board (6), and wherein the coils (8, 9) are arranged on a front side (7) and the computing unit (11) is arranged on a rear side (10) of the printed circuit board (6), the rear side facing away from the front side (7), **characterized in that** the printed circuit board (6) is designed in the shape of a circular disc ring, wherein the inductive rotor position sensor device comprises a rectangular base printed circuit board (15), and wherein the printed circuit board (6) is designed as a printed circuit board (6) cut free in the rectangular base printed circuit board (15) and is connected in one piece to the rectangular base printed circuit board (15) by only one or by several, in particular a maximum of four, webs (17) and can be broken out of this base printed circuit board by destroying the webs (17).

2. Rotor position sensor device according to Claim 1, **characterized in that** at least one shielding layer (12, 13) for shielding the computing unit (11) from the electromagnetic waves is arranged between the coils (8, 9) and the computing unit (11).

3. Rotor position sensor device according to Claim 2, **characterized in that** the shielding layer (12, 13) extends over the entire printed circuit board (6).

4. Rotor position sensor device according to either of Claims 2 and 3, **characterized in that** the shielding layer (12, 13) is designed with multiple slots, in particular multiple radial slots.

5. Rotor position sensor device according to any of Claims 2 to 4, **characterized in that** a further shielding layer (13) is supported on the one shielding layer (12), wherein the two shielding layers (12, 13) are each designed with multiple slots and arranged one above the other in such a way that none of the slots (14) overlap.

6. Drive device (1) for a parking brake of a motor vehicle, comprising an electric machine (2) and comprising an inductive rotor position sensor device (5), which is assigned to the electric machine (2), for detecting a rotor angle position of a rotor (4) of the electric machine (2), **characterized by** the design of the rotor position sensor device (5) according to one or more of Claims 1 to 5.

## Revendications

1. Dispositif inductif de détection de position de rotor (5) destiné à détecter une position angulaire de rotor d'un rotor (4) d'une machine électrique (2), avec une bobine émettrice (8) destinée à générer des ondes électromagnétiques et une bobine réceptrice (9) destinée à détecter les ondes électromagnétiques générées par la bobine émettrice (8) et influencées par le rotor (4), et avec une unité de calcul (11), qui est formée pour piloter la bobine émettrice (8) et pour évaluer les ondes électromagnétiques détectées par la bobine réceptrice (9) pour déterminer la position angulaire de rotor, les bobines (8, 9) et l'unité de calcul (11) étant disposées sur une carte de circuits imprimés (6) commune, et les bobines (8, 9) étant disposées sur une face avant (7) et l'unité de calcul (11) sur une face arrière (10) de la carte de circuits imprimés (6) opposée à la face avant (7), **caractérisé en ce que** la carte de circuits imprimés (6) est formée avec une forme d'anneau circulaire, le dispositif inductif de détection de position de rotor comprenant une carte de circuits imprimés de base rectangulaire (15), la carte de circuits imprimés (6) étant formée comme une carte de circuits imprimés (6) découpée dans la carte de circuits imprimés de base rectangulaire (15) et étant reliée d'une seule pièce à la carte de circuits imprimés de base rectangulaire (15) par seulement une ou par plusieurs nervures (17), en particulier au maximum quatre, et pouvant être arrachée de celle-ci par destruction des nervures (17).

2. Dispositif de détection de position de rotor selon la revendication 1, **caractérisé en ce qu'**au moins une couche de blindage (12, 13) pour protéger l'unité de calcul (11) des ondes électromagnétiques est disposée entre les bobines (8, 9) et l'unité de calcul (11).

3. Dispositif de détection de position de rotor selon la revendication 2, **caractérisé en ce que** la couche de blindage (12, 13) s'étend sur l'ensemble de la carte de circuits imprimés (6).

4. Dispositif de détection de position de rotor selon l'une des revendications 2 ou 3, **caractérisé en ce que** la couche de blindage (12, 13) est formée de manière entaillée à plusieurs reprises, en particulier de manière entaillée radialement à plusieurs reprises.

5. Dispositif de détection de position de rotor selon l'une des revendications 2 à 4, **caractérisé en ce qu'**une autre couche de blindage (13) repose sur l'une des couches de blindage (12), les deux couches de blindage (12, 13) étant formées chacune de manière entaillée à plusieurs reprises et étant disposées l'une au-dessus de l'autre de telle manière qu'aucune des entailles (14) ne se chevauche.

6. Dispositif d'entraînement (1) pour un frein de stationnement d'un véhicule à moteur, avec une machine électrique (2) et avec un dispositif inductif de détection de position de rotor (5) associé à la machine électrique (2) destiné à détecter une position angulaire de rotor d'un rotor (4) de la machine électrique (2), **caractérisé par** la formation du dispositif de détection de position de rotor (5) selon une ou plusieurs des revendications 1 à 5.
